# EUROPÄISCHE PATENTSCHRIFT

(11) **EP 0 756 288 B1**
(45) Veröffentlichungstag und Bekanntmachung des Hinweises auf die Patenterteilung: **22.09.1999**
(21) Anmeldenummer: 96112125.8
(22) Anmeldetag: 26.07.1996
(51) Int. Cl.: G21C 9/016

(54) **Behälter zur Aufnahme und Ausbreitung von Kernschmelze sowie Kernkraftanlage mit einem solchen Behälter**
Container for receiving and dispersing a molten nuclear core and nuclear installation comprising such a container
Conteneur pour recevoir et étaler un coeur en fusion et installation nucléaire comprenant un tel conteneur

(30) Priorität: 27.07.1995 DE 19527462
(43) Veröffentlichungstag der Anmeldung: 29.01.1997
(73) Patentinhaber: SIEMENS AKTIENGESELLSCHAFT, 80333 München (DE)
(72) Erfinder: Kolev, Nikolay-Ivanov, Dr., 91074 Herzogenaurach (DE)

(56) Entgegenhaltungen:
- EP-A- 0 514 243
- EP-A- 0 587 959
- DE-A- 4 322 107
- FR-A- 2 341 181

## Beschreibung

Die Erfindung betrifft einen Behälter zur Aufnahme und Ausbreitung von Kernschmelze in einer Kernkraftanlage mit einer Wandpartie und einem Boden sowie eine Kernkraftanlage mit einem Reaktordruckbehälter, welcher in einer Reaktorgrube angeordnet ist und einen Reaktorkern enthält, und mit einem Behälter zur Aufnahme und Ausbreitung von Kernschmelze.

Bei der sicherheitstechnischen Auslegung von Kernkraftanlagen, insbesondere Leichtwasser-Kernkraftanlagen, wird auch die Beherrschung von äußerst unwahrscheinlichen Störfällen, bei denen der Reaktorkern abschmilzt, berücksichtigt. Dies erfolgt beispielsweise dadurch, daß unmittelbar unterhalb oder seitlich unterhalb des Reaktordruckbehälters ein Raum vorgesehen ist, in dem durch einen abschmelzenden Reaktorkern entstehende Kernschmelze aufgefangen und abgekühlt werden kann, so daß keine Beeinträchtigung der Umgebung besteht. Die Auswirkungen eines solch unwahrscheinlichen Störfalles blieben somit auf die Kernkraftanlage beschränkt. Bei einer seitlichen Anordnung ist, wie in der WO 94/29876 beispielsweise beschrieben, der Auffangraum großflächig ausgebildet. Hierdurch kann sich Kernschmelze großflächig mit einer geringen Schichtdicke ausbreiten, wodurch eine große Oberfläche entsteht, die wirksam kühlbar ist. Von der Reaktorgrube, in die der Reaktordruckbehälter aufgenommen ist, führt unterhalb des Reaktordruckbehälters eine Durchführung zu dem Ausbreitungsraum. Diese Durchführung ist während eines normalen Betriebes der Kernkraftanlage verschlossen. Der Ausbreitungsraum sowie die Reaktorgrube sind während des normalen Betriebes frei von Wasser, so daß bei einem Austritt von Kernschmelze eine Dampfexplosion sicher vermieden wird. Erst wenn die Kernschmelze in den Ausbreitungsraum eintritt, erfolgt auf passive Art und Weise ein Einleiten von Wasser in den Ausbreitungsraum. Hierbei entstehender Dampf kann großflächig aus dem Ausbreitungsraum abgeführt werden. Auf alle Fälle ist sichergestellt, daß keine unkontrollierte Dampfbildung in der Reaktorgrube stattfindet.

Aus der DE 43 22 107 A1 ist eine Einrichtung zum Auffangen und Kühlen von Kernschmelze bekannt, bei der ein Kühlmittel durch Kühlkanäle fließt, die im Boden einer Ausbreitungskammer für Kernschmelze angeordnet sind. Dadurch wird nur der Boden gekühlt.

Aufgabe der Erfindung ist es, einen Auffangbehälter für Kernschmelze in einer Kernkraftanlage anzugeben, mit dem eine noch wirksamere und passive Kühlung der Kernschmelze mit allenfalls einer geringen und kontrollierten Bildung von Dampf gewährleistet ist. Weiterhin ist es Aufgabe der Erfindung, eine Kernkraftanlage mit einem Auffangbehälter für Kernschmelze anzugeben, bei der die Bildung von Dampf und Wasserstoff bei Austritt von Kernschmelze weitgehend unterbunden ist.

Erfindungsgemäß wird die auf einen Behälter gerichtete Aufgabe durch einen Behälter zur Aufnahme und Ausbreitung von Kernschmelze einer Kernkraftanlage gelöst, der einen strukturierten Boden hat, welcher
a) ein gut wärmeleitfähiges Material aufweist,
b) eine Mehrzahl von geodätisch höchstliegender Punkte und eine Mehrzahl geodätisch tiefstliegender Punkte hat,
c) eine Außenwandung besitzt, die zwischen einem tiefstliegenden Punkt und einem benachbarten höchstliegenden Punkt steigend verläuft, wobei an jedem geodätisch höchstliegenden Punkt eine durch das Behälterinnere verlaufende Dampfleitung vorgesehen ist.
Die geodätisch höchstliegenden Punkte sind hierbei als lokale Maxima des Bodens zu verstehen, die in einer Ebene oder auf unterschiedlichen geodätischen Höhen liegen können. Die geodätisch tiefstliegenden Punkte sind lokale Minima des Bodens, die in einer Ebene oder auf geodätisch unterschiedlichem Niveau liegen können. Ein steigender Verlauf der Außenwandung des Bodens zwischen einem geodätisch höchst liegenden Punkt und einem dazu benachbarten geodätisch tiefstliegenden Punkt bedeutet, daß zwischen diesen beiden Punkten ein horizontaler Verlauf, d.h. ein Verlauf auf einem konstanten geodätischen Niveau, weitgehend ausgeschlossen ist. Dies hat den Vorzug, daß Kühlflüssigkeit, die außen an dem steigenden bzw. fallenden Boden anliegt, durch Erwärmung an dem Boden nach oben aufsteigt und sich darin bildende Dampfblasen über die Dampfleitung abführbar sind. Diese sind so ausgelegt, daß ein Zweiphasengemisch (Dampf/Kühlflüssigkeit) selbst in einer transienten Strömungsphase in ausreichender Menge durchströmen kann. Sie bestehen beispielsweise aus einem wärmeisolierenden Material oder sind mit einem solchen Material umgeben. Mit dem steigenden Verlauf wird wirksam verhindert, daß sich ein Dampfblasenbereich an der Außenseite des Bodens bildet und damit die Wärmeübertragung aus dem Behälter heraus an die Kühlflüssigkeit beeinträchtigt wird. Besonders vorteilhaft ist es, daß die in den Behälter einströmende Kernschmelze nicht unmittelbar in Kontakt mit einer Kühlflüssigkeit gelangt und somit eine unkontrollierte Dampfbildung, Dampfexplosion, sicher verhindert ist. Es erfolgt lediglich ein Wärmeaustausch zwischen der Kernschmelze und einer den Boden umgebenden Kühlflüssigkeit bzw. einer an den Behälter angeschlossenen Kühlvorrichtung. Durch Vermeidung eines direkten Kontaktes von Metall, welches im Nachgang zu der Kernschmelze in den Behälter einströmen kann, wird zudem eine wasserstoffbildende Reaktion zwischen einer Kühlflüssigkeit, insbesondere Wasser, und diesem Metall vermieden.
Vorzugsweise verläuft der Boden zwischen einem geodätisch tiefstliegenden Punkt und einem benachbarten geodätisch höchstliegenden Punkt mit einer streng monotonen Steigung, wobei die Steigung zwischen einem geodätisch tiefstliegenden Punkt und einem geodätisch höchst liegenden Punkt konstant sein kann. Hierdurch ist der Boden fertigungstechnisch besonders einfach herstellbar.

Der Boden hat vorzugsweise eine Wandstärke von 1 cm bis 10 cm, insbesondere 5 cm, wobei die Wandstärke besonders bei einem Boden, welcher als wärmeleitfähiges Material einen Stahl aufweist, bevorzugt verwendet wird. Da der Boden unmittelbar mit der Kernschmelze in Berührung kommt, ist die Wärmeleitfähigkeit des Materials für den Boden so zu wählen, daß möglichst schnell eine Krustenbildung im Bereich des Bodens erfolgt. Ein Stahl verfügt über eine so hohe Wärmeleitfähigkeit, daß innerhalb weniger Minuten eine Erstarrung der Kernschmelze unmittelbar in der Umgebung des Bodens erreichbar ist.

Der Behälter ist vorzugsweise mit einer Decke aus einem gut wärmeleitfähigen Material geschlossen. Bei Eindringen von Kernschmelze in den Behälter gelangt die Decke zwar nicht in unmittelbaren Kontakt mit der Kernschmelze aber infolge von Wärmestrahlung wird dennoch eine hohe thermische Belastung auf die Decke ausgeübt. Deshalb ist die Decke bevorzugt so auszulegen, daß die über Wärmestrahlung abgegebene Wärme schnell abführbar ist. Die Decke kann hierbei an ein separates Kühlsystem angeschlossen oder insbesondere über die Dampfleitungen mit einer den Boden umgebenden Kühlflüssigkeit verbunden sein.

Um eine Überdruckbildung in dem Behälter zu vermeiden sind durch die Decke Leitungen geführt, die mit einem differenzdruckabhängigen Sperrelement für eine Fluidströmung versperrt sind. Das Sperrelement kann beispielsweise eine Einwegberstmembran sein. Eine Auslösung der Berstmembran erfolgt vorzugsweise nur bei einem solchen Differenzdruck, bei dem der Druck innerhalb des Behälters höher als außerhalb des Behälters ist. Hierzu ist die Berstmembran beispielsweise zu dem Behälter hin mit einem metallischen Unternetz abgestützt. Die die Decke durchdringenden Leitungen sind geodätisch so hoch geführt, daß sie über das Niveau einer der Kühlung der Decke dienenden Kühlflüssigkeit hinausragen.

Der Boden des Behälters weist vorzugsweise singuläre geodätisch höchstliegende Punkte auf, die die Spitze einer jeweiligen Pyramide, eines Kegels oder einer Halbschale (Kuppel) darstellen. Die Kuppeln oder Pyramiden (Kegel) haben einen kreisförmigen oder rechteckigen Querschnitt. Andere Querschnittsformen, beispielsweise dreieckig oder oval, sind selbstverständlich ebenfalls möglich.

Der Boden des Behälters hat in diesem Fall eine gitterartige Struktur, wobei die geodätisch tiefstliegenden Punkte auf Gitterlinien liegen und in den durch die Gitterlinien gebildeten Drei,- oder Vierecken im wesentlichen singuläre geodätisch höchst liegende Punkte angeordnet sind. An den singulären geodätisch höchstliegenden Punkten kann besonders einfach eine jeweilige Dampfleitung angeschlossen werden. Die geodätisch höchstliegenden Punkte sowie die geodätisch tiefstliegenden Punkte können ebenfalls auf sich nicht schneidenden Linien angeordnet sein, so daß der Boden mit sich nicht schneidenden, im wesentlichen zueinander parallelen, Furchen strukturiert ist. Auch können die sich kreuzenden Gitterlinien durch die geodätisch tiefstliegenden Punkte gebildet sein.

Die auf eine Kernkraftanlage bezogene Aufgabe wird durch eine Kernkraftanlage gelöst, die einen Reaktordruckbehälter, der in einer Reaktorgrube angeordnet ist und den Reaktorkern enthält und die einen Behälter zur Aufnahme und Ausbreitung von Kernschmelze aufweist, welcher mit der Reaktorgrube verbindbar ist. Der Behälter hat einen Boden, der ein gut wärmeleitfähiges Material, eine Mehrzahl von geodätisch höchstliegenden Punkten und eine Mehrzahl von geodätisch tiefstliegenden Punkten sowie eine Außenwandung aufweist, wobei die Außenwandung zwischen einem geodätisch tiefstliegenden Punkt und einem benachbarten geodätisch höchstliegenden Punkt steigend verläuft und mit einer Kühlflüssigkeit umgebbar ist. Zudem ist an einem geodätisch höchstliegenden Punkt eine durch das Behälterinnere verlaufende Dampfleitung vorgesehen. Eine solche Kernkraftanlage mit einem Behälter zur Aufnahme und Ausbreitung von Kernschmelze, dessen Boden abwechselnd steigend und fallend verläuft und von außen her mit einer Kühlflüssigkeit kühlbar ist, gewährleistet, daß die im Behälter auf dem Boden gesammelte und zurückgehaltene Kernschmelze effektiv gekühlt wird, ohne daß sich an der Außenwandung des Bodens ein schlecht wärmeleitender Dampffilm bildet. Mit der Vermeidung eines solchen Dampffilmes ist eine effektive Kühlung und ein sicherer Einschluß der Kernschmelze gewährleistet. Insbesondere erfolgt aufgrund der guten Wärmeleitfähigkeit des Bodens eine schnelle Krustenbildung der Schmelze im Bereich des Bodens. Eventuell an der Außenwandung sich bildender Dampf wird effektiv über die Dampfleitungen abgeführt, wozu diese jeweils an einem geodätisch höchstliegenden Punkt des Bodens vorgesehen sind, zu dem der entstehende Dampf aufsteigt. Der Boden ist vorzugsweise aus einem Metall, insbesondere einem Stahl gefertigt. Die Wandpartie des Behälters kann ebenfalls aus einem gut wärmeleitenden Material, einem Metall bestehen. Sie kann aber auch in eine Tragstruktur der Kernkraftanlage, insbesondere einer Betonstruktur integriert sein. Die Dampfleitung kann alternativ aus einem wärmeleitfähigen oder wärmeisolierenden Material hergestellt sein. Durch eine Außenkühlung des Behälters ohne direkten Kontakt der Kernschmelze mit der Kühlflüssigkeit wird sowohl eine Dampfexplosion als auch die Bildung von Wasserstoff, insbesondere durch das in der Kernschmelze mitgeführte geschmolzene Metall der Kernkraftanlage, mit Sicherheit vermieden. Auch wird die Bildung von radioaktiven Aerosolen an der Oberfläche der Kernschmelze durch die Vermeidung eines direkten Kontaktes mit der Kühlflüssigkeit deutlich reduziert. Darüber hinaus wird, wenn Aerosole entstehen, deren Ausbreitung auf einen engen Raumbereich begrenzt. Insbesondere werden keine Aerosole an die Umgebung der Kernkraftanlage abgegeben.

Der Behälter ist vorzugsweise mit einer Decke aus einem wärmeleitfähigem Material geschlossen, welches geeignet ist, die von einer Kernschmelze abgegebene thermische Strahlungsleistung aufzunehmen und an ein Kühlsystem oder unmittelbar an eine Kühlflüssigkeit abzugeben. Hierdurch ist gewährleistet, daß sowohl über den unmittelbar mit der Kernschmelze in Kontakt stehenden Boden ausreichend Wärmeenergie abgeführt sowie auch die über Wärmestrahlung abgegebene Wärme der Schmelze in kurzer Zeit an der Decke aufgenommen wird.

Vorzugsweise ist der Behälter vollständig mit einer Kühlflüssigkeit umgeben. Die Kühlflüssigkeit kann den Behälter bereits während eines normalen Betriebes der Kernkraftanlage umgeben oder wird bei Auftreten eines Störfalls mit abschmelzendem Reaktorkern durch Flutung zugeführt. In beiden Fällen ist mit Sicherheit gewährleistet, daß bei einem Störfall mit abschmelzendem Reaktorkern bei Eindringen der Kernschmelze in den Behälter dieser zum Zwecke der Kühlung vollständig mit einer Kühlflüssigkeit umgeben ist.

Je nach Dimensionierung und Wahl der Materialien kann der Behälter an einer Tragstruktur der Kernkraftanlage von oben befestigt, insbesondere aufgehängt sein, oder von unten abgestützt bzw. verankert werden. Eine Befestigung des Behälters erfolgt vorzugsweise so, daß er thermisch beweglich ist, wodurch bei einem Einströmen der Kernschmelze das Auftreten von thermischen Spannungen vermindert wird. Der Behälter ist vorzugsweise geodätisch unterhalb des Reaktordruckbehälters mit einer Öffnung der Reaktorgrube verbunden, beispielsweise über einen Kanal, eine Rutsche oder ähnlichem.

Für eine effektive großflächige Ausbreitung der Kernschmelze hat der Behälter vorzugsweise eine horizontale Querschnittsfläche von 100 m² bis 200 m² insbesondere 170 m². Durch den steigenden und fallenden Verlauf des Bodens des Behälters ist die tatsächlich zur Kühlung durch unmittelbaren Kontakt mit der Kernschmelze zur Verfügung stehende Oberfläche des Bodens deutlich größer als dessen horizontale Querschnittsfläche. Durch Wahl der Strukturierung des Bodens kann somit je nach Anforderung die Kühlleistung des Behälters sowie die Ausbreitung der Kernschmelze bestimmt werden.

Anhand der Zeichnung wird der Behälter sowie die Kernkraftanlage näher erläutert. Es zeigen:
- FIG 1: einen Längsschnitt einer Kernkraftanlage,
- FIG 2: eine räumliche Darstellung eines Behälters zur Aufnahme der Kernschmelze in vergrößertem Maßstab,
- FIG 3: ein Detail aus Figur 2 in nochmals vergrößertem Maßstab in einem Längsschnitt, und
- FIG 4 sowie FIG 5: einen Querschnitt durch den Boden des Behälters.

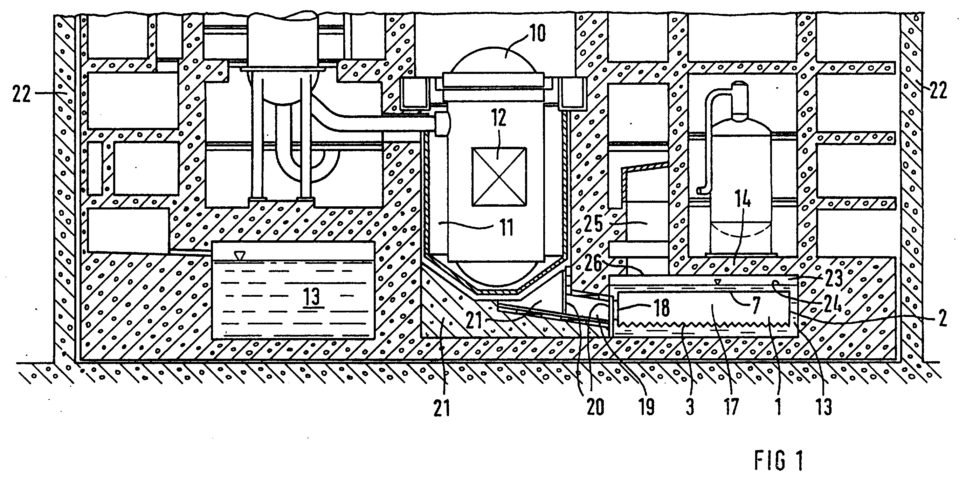

In Figur 1 ist schematisch in einem Längsschnitt eine Kernkraftanlage dargestellt. In einem Sicherheitsbehälter 22 ist ein Reaktordruckbehälter 10 in einer Reaktorgrube 11 gehaltert. Der Reaktordruckbehälter 10 beinhaltet den Reaktorkern 12. Geodätisch unterhalb des Reaktordruckbehälters 10 sind in der Reaktorgrube 11 Füllkörper 21 angeordnet, die das freie Volumen der Reaktorgrube 11 unterhalb des Reaktordruckbehälters 10 verkleinern. Geodätisch unterhalb und seitlich des Reaktordruckbehälters 10 hat die Reaktorgrube 11 eine Durchlaßöffnung 19, welche in einen Auffangraum 23 für Kernschmelze 27 mündet. Die Durchlaßöffnung 19 ist beidseitig mit einem jeweiligen Verschlußelement 20 wasserdicht während des normalen Betriebes der Kernkraftanlage verschlossen. In der Reaktorgrube 11 ist vor dem zugehörigen Verschlußelement 20 ein Füllkörper 21 angeordnet, welcher bei Kontakt mit einer Kernschmelze 27 aufschmilzt und den Weg zu dem Verschlußelement 20 freigibt, welches ebenfalls bei Kontakt mit der Kernschmelze 27 versagt und die Durchlaßöffnung 19 frei gibt. In dem Auffangraum 23 ist unmittelbar mit der Durchlaßöffnung 19 verbunden ein Behälter 1 zur Aufnahme und Ausbreitung der Kernschmelze 27 angeordnet. Dieser Behälter 1 hat eine Eintrittsöffnung 18 in das Behälterinnere 17, eine Wandpartie 2, einen Boden 3 sowie eine Decke 7. Boden 3 und Decke 7 sind aus einem gut wärmeleitfähigem Material, insbesondere einem Stahl, gefertigt. Der Boden 3 hat im Längsschnitt gesehen einen zickzackförmigen Verlauf. Der Auffangraum 23 ist bereits während des normalen Betriebes der Kernkraftanlage bis zu einem Niveau 24 mit Kühlflüssigkeit 13 gefüllt, wobei das Niveau 24 geodätisch oberhalb der Decke 7 liegt. Die Füllung des Auffangraumes 23 mit Kühlflüssigkeit 13 kann auch nach dem Austreten von Kernschmelze aus dem Reaktordruckbehälter 10 und vor dem Eintreffen der Kernschmelze 27 im Behälter 1 erfolgen. Der Behälter 1 ist somit in jedem Fall vor dem Eintreffen der Kernschmelze 27 vollständig von der Kühlflüssigkeit 13 umgeben. Während des normalen Betriebes oder während einer Störung des Betriebs der Kernkraftanlage anfallendes Kondensat kann somit gefahrlos in den Auffangraum 23 geführt werden. Der Auffangraum 23 wird durch eine Tragstruktur 14, insbesondere aus Beton, gebildet, welche auch der Befestigung des Behälters 1 dient. Die Austrittsöffnung 26 des Auffangbehälters 23 führt zu einem Dampfabzugskanal 25. Gleiche Bezugszeichen bezeichnen im Folgenden auch gleiche Gegenstände.

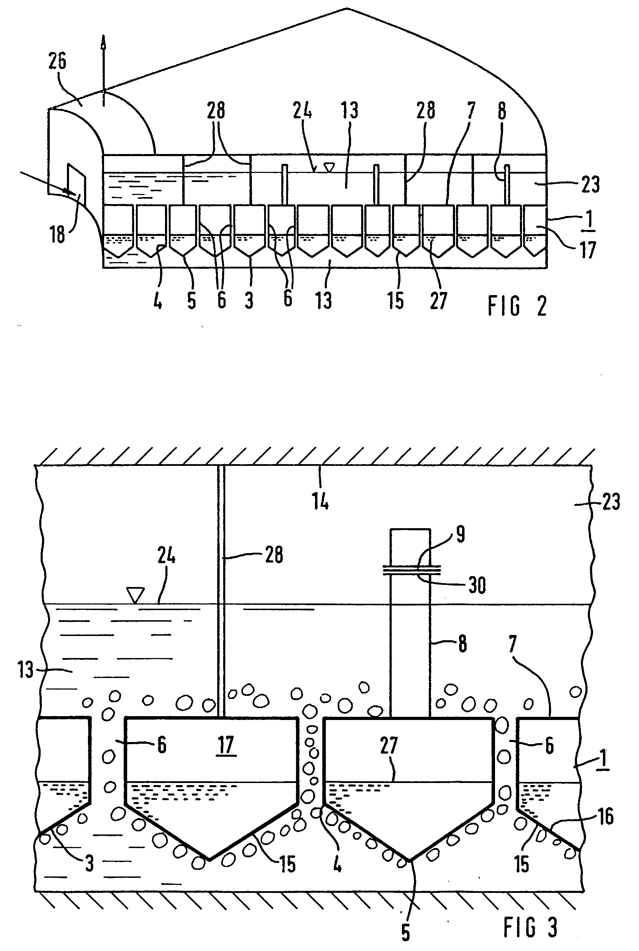

Figur 2 zeigt in einer räumlichen Darstellung in einem vergrößerten Maßstab den Auffangraum 23 gemäß Figur 1. Der Auffangraum 23 sowie der Behälter 1 haben jeweils eine Querschnittsfläche, die einem Kreisringsegment entsprechen kann. Der Behälter 1 weist zur Reaktorgrube 11 hin eine Eintrittsöffnung 18 auf, die mit der Durchlaßöffnung 19 der Reaktorgrube 11 verbunden ist. Durch diese Eintrittsöffnung 18 kann Kernschmelze 27 in den Behälter eintreten. Der Behälter 1 hat einen Boden 3, welcher eine Mehrzahl von geodätisch höchstliegenden Punkten 4 und einer Mehrzahl geodätisch tiefstliegender Punkte 5 aufweist. Die geodätisch höchstliegenden Punkte 4 sowie die geodätisch tiefstliegenden Punkte 5 sind jeweils in einer entsprechenden Ebene angeordnet. Außenwandung 15 sowie Innenwandung 16 des Bodens 3 verlaufen zu den geodätisch höchst liegenden Punkten jeweils mit derselben konstanten Steigung. An den geodätisch höchstliegenden Punkten 4 ist jeweils eine vertikal durch das Behälterinnere 17 hindurchlaufende Dampfleitung 6 angeschlossen, die an der Decke 7 in den Auffangraum 23 öffnet. Hierdurch ist eine Verbindung zwischen der geodätisch unterhalb des Bodens 3 und der geodätisch oberhalb der Decke 7 vorhandenen Kühlflüssigkeit 13, insbesondere Kühlwasser, gegeben. Der Behälter 1 ist mit der Tragstruktur 14 der Kernkraftanlage über eine Mehrzahl von Befestigungselementen 28 verbunden. Diese Befestigungselemente 28 sind jeweils an der Decke 7 befestigt, so daß der Behälter 1 wärmebeweglich in dem Auffangraum 23 ist. An der Decke 7 sind ebenfalls vertikal verlaufende Leitungen 8 befestigt, die das Behälterinnere 17 mit einem Bereich des Auffangraums 23 oberhalb des Niveaus 24 der Kühlflüssigkeit 13 verbinden. Hierdurch ist falls nötig ein Druckausgleich zwischen dem Behälterinneren 17 und dem Auffangraum 23 sowie dem Inneren des Sicherheitsbehälters 22 gegeben.

In Figur 3 ist ein Ausschnitt des Behälters 1 in einem nochmals vergrößertem Maßstab dargestellt. In der kassettenartigen Struktur des Bodens 3 mit Vertiefungen zwischen den geodätisch höchstliegenden Punkten 4 und den geodätisch tiefstliegenden Punkten 5 wird die dargestellte Kernschmelze 27 in dem Boden 3 gesammelt. Der Behälter 1 ist vollständig mit der Kühlflüssigkeit 13 umgeben, wobei wie schematisch dargestellt an der Außenwandung 15 des Behälters 1 eine Dampfblasenbildung infolge der von der Kernschmelze 27 abgegebenen Wärme auftritt. Durch den steigenden Verlauf der Außenwandung 15 findet eine Strömung der Dampfblasen sowie der Kühlflüssigkeit 13 in Naturkonvektion durch die vertikal verlaufenden Dampfleitungen 6 statt. Die Bildung eines Dampffilms, welcher eine wirksame Kühlung stark beeinträchtigt, ist dadurch vermieden, daß die Außenwandung 15 immer steigend und nicht horizontal verläuft. Es wird somit eine effektive Kühlung der Kernschmelze 27 mit einer schnellen Erstarrung erreicht. Nachfolgende Schmelzausgüsse sind daher unproblematisch. Auch können unter Umständen auftretende Risse in dem Boden infolge von Wärmespannungen durch eine schnelle Krustenbildung der Kernschmelze verschlossen werden. An der Dekke 7 des Behälters 1 sind Druckleitungen 8 angeschlossen. Diese Druckleitungen 8 sind mit einem jeweiligen Sperrelement 9, insbesondere einer Berstmembran, verschlossen. An der der Decke 7 zugewandten Seite weist die Berstmembran 9 eine Verstärkung 30, insbesondere ein metallisches Unternetz, auf. Hierdurch ist gewährleistet, daß bei einem Überdruck in dem Behälter die Berstmembran 9 versagt und damit die Druckleitung 8 geöffnet wird und somit eine Druckentlastung des Behälters 1 stattfindet, falls die Druckentlastung durch die Durchlaßöffnung 19 bei geschmolzenen Verschlußelementen 20 nicht ausreicht. Bei einer kurzfristigen Erhöhung des Druckes in dem Auffangraum 23 bleibt die Berstmembran 9 jedoch intakt, wodurch ein unerwünschtes Ausströmen von radioaktiven Aerosolen und anderen Spaltprodukten sicher vermieden wird. Zur zusätzlichen Rückhaltung von radioaktiven Aerosolen und anderen Spaltprodukten kann die Druckleitung 8 U-förmig in der Kühlflüssigkeit 13 nach Art eines inversen Siphons geführt sein.

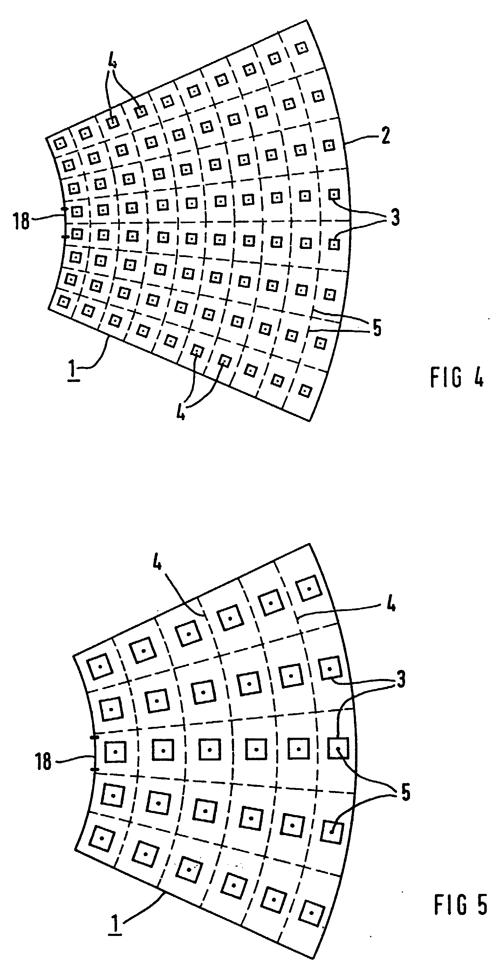

In den Figuren 4 und 5 ist die Querschnittsfläche eines kreisringsegmentartigen Behälters 1 dargestellt. Figur 4 zeigt einen strukturierten Boden 3, bei dem pyramidenförmige Erhöhungen vorhanden sind, wobei an der Spitze jeder Pyramide ein geodätisch höchstliegender Punkt 4 liegt. Die Pyramiden haben einen im wesentlichen viereckigen Querschnitt, so daß die geodätisch tiefstliegenden Punkte 5 (strichliert dargestellt) auf sich kreuzenden Gitterlinien liegen. An die singulären geodätisch höchstliegenden Punkte 4 ist jeweils eine Dampfleitung 6 aus einem schlecht wärmeleitendem Material angeordnet. Figur 5 zeigt die zu Figur 4 inverse Struktur des Bodens 3. Hier sind die geodätisch tiefstliegenden Punkte 5 singulär verteilt und liegen an der Spitze einer auf dem Kopf stehenden Pyramide. Die geodätisch höchstliegenden Punkte 4 liegen demnach auf den strichliert dargestellten sich kreuzenden Gitterlinien. Selbstverständlich können die Pyramiden einen anderen Querschnitt, beispielsweise rund, oval oder dreieckig, besitzen.

Die Erfindung zeichnet sich durch einen Behälter zur Aufnahme und Ausbreitung von Kernschmelze aus, der einen strukturierten Boden mit einer Außenwandung hat, die alternierend steigend und fallend verläuft. Insbesondere verläuft die Außenwandung nach Art von Pyramiden oder Kegeln, an deren Spitze eine vertikale Dampfleitung durch den Behälter hindurchgeführt ist. Der Boden besteht aus einem gut wärmeleitendem Material, so daß die in den durch die Pyramiden oder Kegeln gebildeten Zwischenräume des Bodens gesammelte Kernschmelze Wärme gut an die Außenwandung abgibt. An der Außenwandung liegt eine Kühlflüssigkeit an, die in Naturkonvektion die Wärme der Außenwandung nach oben abführt. Durch den steigenden Verlauf der Außenwandung ist wirksam eine Bildung eines räumlich fixierten Dampffilms verhindert, welcher schlecht wärmeleitend wäre und die Abfuhr der Wärmeenergie der Kernschmelze behindern würde. Durch eine Kühlung der Kernschmelze an der Außenwandung des Behälters wird ein direkter Kontakt der Schmelze mit der Kühlflüssigkeit vermieden. Hierdurch ist gewährleistet, daß weder bei der Kühlung der Kernschmelze eine Dampfexplosion auftritt noch Wasserstoff über ein in der Kernschmelze mitgeführtes Metall produziert wird. Zusätzlich ist die Bildung von radioaktiven Aerosolprodukten an der Oberfläche der Kernschmelze weitgehend vermieden und ein Austrag solcher Aerosolprodukte aus dem Behälter begrenzt. Ein Austrag von Aerosolprodukten in die Umgebung der Kernkraftanlage wird somit ebenfalls wirkungsvoll vermindert, wenn nicht sogar vollständig verhindert.

## Patentansprüche

1. Behälter (1) zur Aufnahme und Ausbreitung von Kernschmelze (27) in einer Kernkraftanlage mit einem strukturierten Boden (3), der
a) ein gut wärmeleitfähiges Material aufweist,
b) eine Mehrzahl von geodätisch tiefstliegenden Punkten (5) und eine Mehrzahl von geodätisch höchstliegenden Punkten (4) hat,
c) eine Außenwandung (15) besitzt, die zwischen einem geodätisch tiefstliegenden Punkt (5) und einem benachbarten geodätisch höchstliegenden Punkt (4) steigend verläuft,
wobei an jedem geodätisch höchstliegenden Punkt (4) eine durch das Behälterinnere (17) verlaufende Dampfleitung (6) vorgesehen ist.

2. Behälter (1) nach Anspruch 1, bei dem der Boden (3) eine Innenwandung (16) hat, die zwischen einem geodätisch höchstliegenden Punkt (4) und einem benachbarten geodätisch tiefstliegenden Punkt (5) steigend verläuft.

3. Behälter (1) nach Anspruch 1 oder 2, der mit einer Decke (7) aus gut wärmeleitfähigem Material geschlossen ist.

4. Behälter (1) nach Anspruch 3, bei dem die Decke (7) durch-dringend Leitungen (8) vorgesehen sind, die mit einem differenzdruckabhängigen Sperrelement (9) für eine Fluidströmung versperrt sind.

5. Behälter (1) nach einem der vorhergehenden Ansprüche, bei dem der Boden (3) um einen jeweiligen geodätisch höchstliegenden Punkt (4) kuppelförmig oder pyramidenförmig ausgebildet ist.

6. Behälter (1) nach einem der vorhergehenden Ansprüche, bei dem der Boden (3) eine Wandstärke von 1 cm bis 10 cm hat.

7. Behälter (1) nach einem der vorhergehenden Ansprüche, bei dem der Boden (3) aus einem Metall besteht.

8. Kernkraftanlage mit einem Reaktordruckbehälter (10), welcher in einer Reaktorgrube (11) angeordnet ist und einen Reaktorkern (12) enthält, mit einem Behälter (1) zur Aufnahme und Ausbreitung von Kernschmelze (27) der mit der Reaktorgrube (11) verbindbar ist, mit einer Wandpartie (2) und einem Bodenpartie (3), der
a) ein gut wärmeleitfähiges Material aufweist,
b) eine Mehrzahl von geodätisch tiefstliegenden Punkten (5) und eine Mehrzahl von geodätisch höchstliegenden Punkten (4) hat,
c) eine Außenwandung (15) besitzt, die zwischen einem geodätisch tiefstliegenden Punkt (5) und einem benachbarten geodätisch höchstliegenden Punkt (4) steigend verläuft und mit einer Kühlflüssigkeit (13) umgebbar ist,
wobei an jedem geodätisch höchstliegenden Punkt (4) eine durch das Behälterinnere (17) verlaufende Dampfleitung (6) vorgesehen ist.

9. Kernkraftanlage nach Anspruch 8, bei der der Behälter (1) mit einer Decke (7) aus wärmeleitfähigem Material geschlossen ist.

10. Kernkraftanlage nach Anspruch 9, bei der der Behälter (1) bei einem Störfall mit abschmelzendem Reaktorkern (12) vollständig mit einer Kühlflüssigkeit (13) umgeben ist.

11. Kernkraftanlage nach einem der Ansprüche 8 bis 10, bei der der Behälter (1) im normalen Betrieb vollständig mit einer Kühlflüssigkeit (13) umgeben ist.

12. Kernkraftanlage nach einem der Ansprüche 8 bis 11, bei der der Behälter (1) an einer Tragstruktur (14) wärmebeweglich befestigt ist.

13. Kernkraftanlage nach einem der Ansprüche 8 bis 12, bei der der Behälter (1) eine Querschnittfläche von 100 m² bis 200 m² hat.

## Claims

1. Container (1) for the collection and spreading of core melt (27) in a nuclear power plant, with a structured bottom (3) which
a) has a material of good thermal conductivity,
b) has a plurality of geodesically lowest points (5) and a plurality of geodesically highest points (4),
c) has an outer wall (15) which extends with an upward slope between a geodesically lowest point (5) and an adjacent geodesically highest point (4),
a steam conduit (6) which runs through the container interior (17) being provided at each geodesically highest point (4).

2. Container (1) according to Claim 1, in which the bottom (3) has an inner wall (16) which extends with an upward slope between a geodesically highest point (4) and an adjacent geodesically lowest point (5).

3. Container (1) according to Claim 1 or 2, which is closed by a top (7) made of material of good thermal conductivity.

4. Container (1) according to Claim 3, in which conduits (8) which pass through the top (7) are provided and these conduits are shut off by means of a differential-pressure-dependent shut-off element (9) for a fluid flow.

5. Container (1) according to one of the preceding claims, in which the bottom (3) is formed in a dome or pyramid shape around a respective geodesically highest point (4).

6. Container (1) according to one of the preceding claims, in which the bottom (3) has a wall thickness of 1 cm to 10 cm.

7. Container (1) according to one of the preceding claims, in which the bottom (3) is composed of a metal.

8. Nuclear power plant with a reactor pressure vessel (10) which is arranged in a reactor cavity (11) and contains a reactor core (12), with a container (1) for the collection and spreading of core melt (27), which can be connected to the reactor cavity (11), with a wall part (2) and a bottom part (3), which
a) has a material of good thermal conductivity,
b) has a plurality of geodesically lowest points (5) and a plurality of geodesically highest points (4),
c) has an outer wall (15) which extends with an upward slope between a geodesically lowest point (5) and an adjacent geodesically highest point (4) and can be surrounded by a cooling liquid (13),
a steam conduit (6) which runs through the container interior (17) being provided at each geodesically highest point (4).

9. Nuclear power plant according to Claim 8, in which the container (1) is closed by a top (7) made of thermally conductive material.

10. Nuclear power plant according to Claim 9, in which, in the event of an accident involving a reactor core (12) which melts down, the container (1) is completely surrounded by a cooling liquid (13).

11. Nuclear power plant according to one of Claims 8 to 10, in which, in normal operation, the container (1) is completely surrounded by a cooling liquid (13).

12. Nuclear power plant according to one of Claims 8 to 11, in which the container (1) is fixed to a supporting structure (14) in a manner which allows it to move with changes in temperature.

13. Nuclear power plant according to one of Claims 8 to 12, in which the container (1) has a cross-sectional area of 100 m² to 200 m².

## Revendications

1. Conteneur (1) pour recevoir et étaler un coeur en fusion (27) dans une installation nucléaire avec un fond structuré (3) qui
a) présente un matériau bon conducteur de chaleur,
b) possède une multitude de points géodésiquement bas (5) et une multitude de points géodésiquement hauts (4),
c) possède une paroi extérieure (15) qui s'étend de façon montante entre un point géodésiquement bas (5) et un point géodésiquement haut voisin (4),
un conduit de vapeur (6) s'étendant à travers l'intérieur du conteneur (17) étant prévu au niveau de chaque point géodésiquement haut (4).

2. Conteneur (1) selon la revendication 1, dans lequel le fond (3) possède une paroi intérieure (16) qui s'étend de façon montante entre un point géodésiquement haut (4) et un point géodésiquement bas voisin (5).

3. Conteneur (1) selon la revendication 1 ou 2, qui est fermé par un plafond (7) en matériau bon conducteur de chaleur.

4. Conteneur (1) selon la revendication 3, dans lequel sont prévus des conduits (8) traversant le plafond (7), qui sont obstrués par un élément de fermeture (9) dépendant de la pression différentielle pour un courant de fluide.

5. Conteneur (1) selon l'une des revendications précédentes, dans lequel le fond (3) est formé autour de chaque point géodésiquement haut (4) en forme de coupole ou en forme de pyramide.

6. Conteneur (1) selon l'une des revendications précédentes, dans lequel le fond (3) possède une épaisseur de paroi de 1 cm à 10 cm.

7. Conteneur (1) selon l'une des revendications précédentes, dans lequel le fond (3) est constitué de métal.

8. Installation nucléaire avec une cuve de réacteur (10), laquelle est disposée dans une fosse de réacteur (11) et contient un coeur de réacteur (12), avec un conteneur (1) pour recevoir et étaler les produits d'un coeur en fusion (27), ledit conteneur pouvant être relié avec la fosse du réacteur (11), avec une partie de paroi (2) et une partie de fond (3) qui
a) présente un matériau bon conducteur de chaleur,
b) possède une multitude de points géodésiquement bas (5) et une multitude de points géodésiquement hauts (4),
c) possède une paroi extérieure (15) qui s'étend de façon montante entre un point géodésiquement bas (5) et un point géodésiquement haut voisin (4) et qui peut être entourée avec un liquide de refroidissement (13),
dans laquelle est prévu au niveau de chaque point géodésiquement haut (4) un conduit de vapeur (6) s'étendant à travers l'intérieur du conteneur (17).

9. Installation nucléaire selon la revendication 8, dans laquelle le conteneur (1) est fermé par un plafond (7) en matériau conducteur de chaleur.

10. Installation nucléaire selon la revendication 9, dans laquelle le conteneur (1) est entièrement entouré par un liquide de refroidissement (13) en cas d'accident avec fusion du coeur du réacteur (12).

11. Installation nucléaire selon l'une des revendications 8 à 10, dans laquelle le conteneur (1) est, en fonctionnement normal, entièrement entouré par un liquide de refroidissement (13).

12. Installation nucléaire selon l'une des revendications 8 à 11, dans laquelle le conteneur (1) est fixé à une structure portante (14) de façon thermiquement mobile.

13. Installation nucléaire selon l'une des revendications 8 à 12, dans laquelle le conteneur (1) a une surface de section comprise entre 100 m² et 200 m².
